# EUROPEAN PATENT SPECIFICATION

(11) **EP 3 132 088 B1**
(45) Date of publication and mention of the grant of the patent: **11.03.2020**
(21) Application number: 15768309.5
(22) Date of filing: 24.03.2015
(51) Int. Cl.: C09B 61/00, C09B 47/00, D06P 3/54, D06P 1/34

(54) **BIOCOMPATIBLE AND BIODEGRADABLE NATURAL DISPERSE DYES FOR DYEING POLYESTER FABRICS**
BIOKOMPATIBLE UND BIOLOGISCH ABBAUBARE NATÜRLICHE DISPERSE FARBSTOFFE ZUM FÄRBEN VON POLYESTERSTOFFEN
COLORANTS DISPERSÉS NATURELS BIOCOMPATIBLES ET BIODÉGRADABLES POUR TEINDRE DES TISSUS DE POLYESTER

(30) Priority: 25.03.2014 US 201461969879 P; 22.05.2014 US 201462001651 P
(43) Date of publication of application: 22.02.2017
(73) Proprietor: Hinoman Ltd, 6021803 Or Yehuda (IL)
(72) Inventor: SHALEV, Itzhak, 76880 Bet Gamliel (IL); ELITUV, Ehud, 85492 Moshav Dekel (IL); BUCEVSCHI MIRCEA, Dan, 7646402 Rehovot (IL)
(74) Representative: Lecomte & Partners
(86) International application number: PCT/IL2015/050305
(87) International publication number: WO 2015/145431

(56) References cited:
- WO-A1-2013/167644
- WO-A2-2013/156863
- US-A- 2 713 584
- US-A- 5 993 880
- DATABASE WPI Week 200121 Thomson Scientific, London, GB; AN 2001-204886 XP002778574, -& JP 2000 297239 A (TOYO INK MFG CO LTD) 24 October 2000 (2000-10-24)

## Description

### FIELD OF THE INVENTION

This invention relates in general to natural disperse dyes. In particular, it relates to disperse dyes derived from green plants or parts thereof, especially those natural disperse dyes that are suitable for dyeing polyester fabrics.

### BACKGROUND OF THE INVENTION

The quality of textile materials is determined by the properties of fibers used and the finishing applied to them. Finishing represents a sum of operations that confers to crude product new values, generated by: color, handle, durability, etc. Conferring a particular color to fabrics is done in the operation of dyeing. This is a particularly important technological stage of textile finishing and the result obtained is dependent on the chemical-morphological structure of the fibrous component, the physical and chemical properties of the selected dyeing agent, and the dyeing technology adopted.

Dyeing is the aqueous application of color to the textile substrates, mainly using synthetic organic dyes and frequently at elevated temperatures and pressures in some of the steps. It is important to point out that there is no dye which dyes all existing fibers and no fiber which can be dyed by all known dyes. During this step, the dyes and chemical aids such as surfactants, acids, alkali/bases, electrolytes, carriers, leveling agents, promoting agents, chelating agents, emulsifying oils, softening agents etc. are applied to the textile to get a uniform depth of color with the color fastness properties suitable for the end use of the fabric. This process includes dispersion of the dye in the aqueous media, diffusion of the dye in the liquid phase followed by adsorption onto the outer surface of the fibers and finally diffusion and adsorption to the inner bulk of the fibers. Depending on the expected end use of the fabrics, different fastness properties may be required. Different types of dye and chemical additives are used to obtain these properties, which is carried out during the finishing step. Coloration can also be accomplished by applying pigments together with binders (polymers that fix the pigment to the fibers). While the terms "pigment" and "dye" are often used interchangeably, strictly speaking, a pigment is insoluble in the given medium, whereas a dye is soluble. The majority of natural dyestuffs are soluble in water. Representative natural pigments are chlorophylls and carotenoids.

The textile dyeing industry, responsible for dyeing various types of fiber, stands out as a particularly significant source of environmental pollution. Independent of the characteristics of the dyes chosen, the final operation of all dyeing process involves washing in baths to remove excesses of the original or hydrolyzed dyes not fixed to the fiber in the previous steps. In these baths, as previously mentioned, it is estimated that approximately 10-50% of the dyes used in the dyeing process are lost, and end up in the effluent, contaminating the environment with about one million tons of these compounds. The release of improperly treated textile effluents into the environment can become an important source of problems for human and environmental health. The major source of dye loss is due to incomplete fixation of the dyes during the textile fiber dyeing step.

In addition to the problem caused by the loss of dye during the dyeing process, in the context of environmental pollution, the textile industry also uses large volumes of water consequently generating large volumes of effluent.

Synthetic fibers are the main raw materials for the textile industry. Over 75% of the global production of synthetic fibers is polyester fibers. Their use is justified by their chemical properties, physico-chemical qualities and particularly by the mechanical properties they possess. Although they are superior to other categories of synthetic fibers, they cannot be dyed with water soluble dyes. Rather, dyeing of polyester fibers is done with disperse dyes.

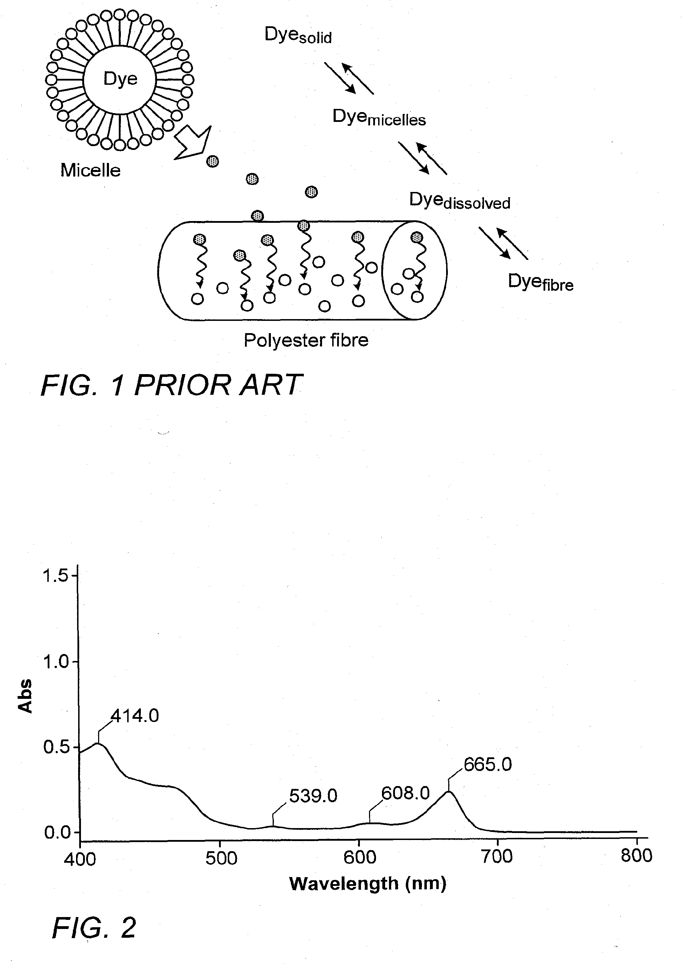

Disperse dyes generally lack strong solubilizing groups and are hence insoluble or sparingly soluble in water. They are often applied on to hydrophobic synthetic fibers from neutral to mildly acidic pH, essentially dissolving in the hydrophobic matrix. These dyes are usually applied from a fine aqueous dispersion containing some dissolved dye. All of the disperse dyes for dyeing of polyester known in the art are synthetic, i.e. they are obtained via a process of chemical synthesis rather than by extraction from naturally-occurring substances. Reference is now made to FIG. 1, which illustrates the mechanism of disperse dyeing as is known in the prior art.

Natural chlorophylls are the most abundant pigments in nature, whose principal function is photosynthesis, the fundamental process for life on Earth. Natural chlorophylls can be extracted economically from a large number of types of plants and plant parts. However, in practice natural chlorophylls are rarely used as colorants for several reasons. First, when chlorophyll is extracted from plant matter, carotenoids, phospholipids and other oil-soluble substances (called "oleoresin") are invariably extracted with the chlorophyll, resulting in products lacking a well-defined composition and with variable levels of pigments, which makes subsequent purification steps essential. Second, endogenous plant enzymes and extraction conditions employed can easily promote chemical modification of the chlorophylls, yielding unattractive brownish-green degradation products like pheophytins and pheophorbides. Consequently, the production costs considering the mentioned difficulties are very high and therefore a more widespread application of natural chlorophylls as colorants is limited.

Scheme 1 illustrates examples of naturally occurring chlorophylls in plants and photosynthetic organisms. Higher plants contain only chlorophylls a and b and their respective breakdown metabolites like pheophytins, chlorophyllides and pheophorbides. In addition to chlorophylls a and b, chlorophylls c, d and e are found in algae and bacteriochlorophylls are found in photosynthetic bacteria.

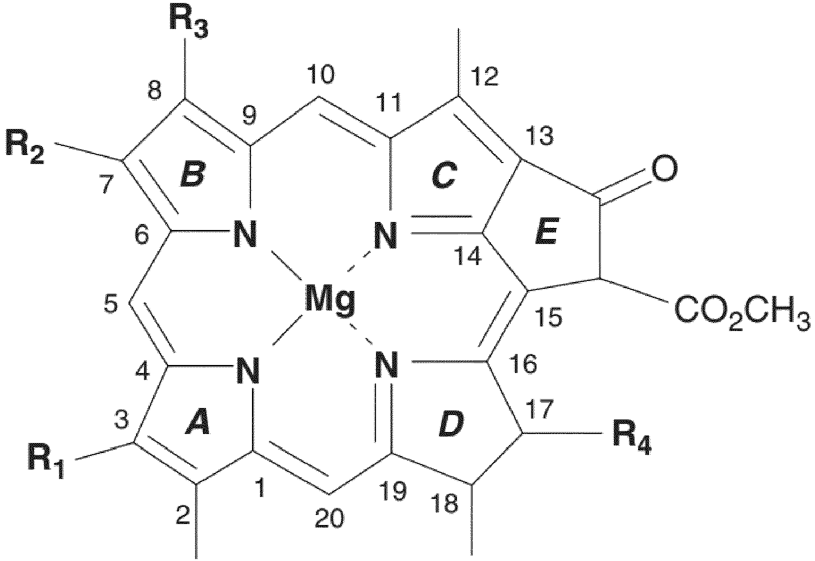

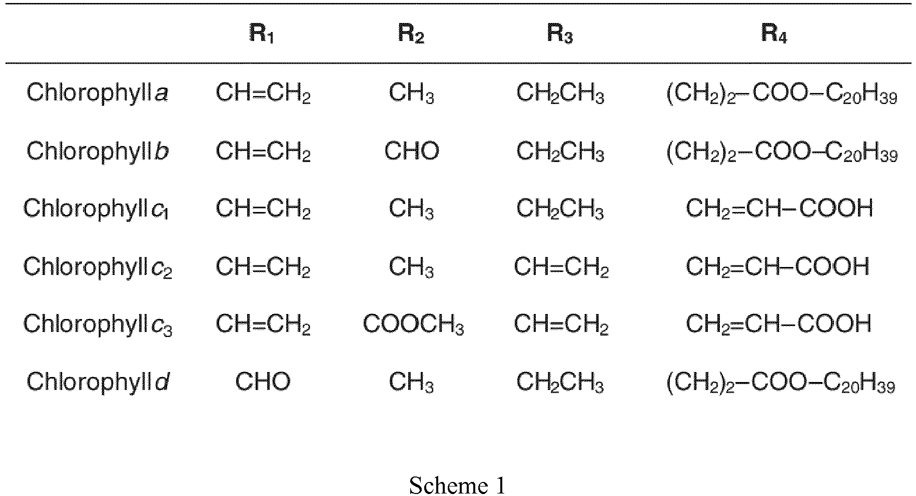

Regardless of the extraction method used, the oleoresin is insoluble in water. Thus, after removal of the solvent used to extract the chlorophyll, the resulting product has an oily character. This makes the raw extract of chlorophyll intractable as a dyestuff. Nevertheless, examples of the use of extracts of leaves and stems for fugitive dyeing of cotton fabrics are known in the art.

Swami et al. (Swami, C.; Saini, S.; Gupta, V. B. Univ. J. Environ. Res. Tech. 2012, 2, 38-47) have reported the use of an alcoholic extract of the stems and leaves of *Sesbania aculeate* for dyeing (with use of a mordant) of cotton fabrics. The ethanolic extract of *Sesbania aculeata* yields a range of camouflage shades. The fastness properties of the dyed samples were quite good.

Promising alternatives with a real potential of usage are water-soluble, metal-chelated chlorophyll derivatives. These pigments have been proposed to be used as food colorants and for a wide range of other industrial applications based on unique physicochemical and photochemical characteristics. Scheme 2 illustrates the reactions that are used to obtain the most important derivatives of chlorophyll.

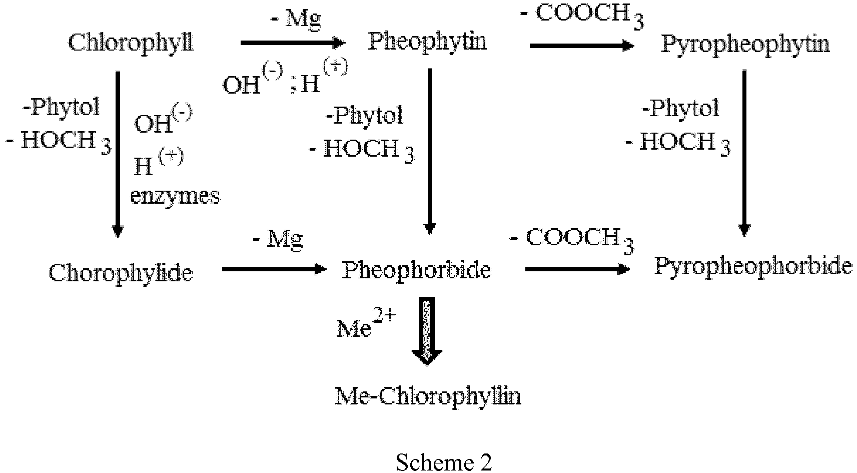

The central Mg atom is easily removed, particularly under acidic conditions, substituting it with hydrogen and thus forming the pheophytins. Difficulties are encountered in substituting the Mg atom except with a Grignard reagent. Other metals (copper. zinc, iron. etc.) can be introduced, however. Hydrolysis of the phytyl group of pheophytin with acid or alkali is used to forming pheophorbides. Cleavage of the phytyl group without removal of the Mg atom produces the chlorophyllides. Epimerization at the C-10 center, located on the isocylic ring, induced by mild heating, forms the isomers designated as a' and b'. Prolonged heating causes decarbomethoxylation at C-10 giving rise to "pyro" derivatives.

Synthesis of water-soluble chlorophyll derivatives suitable for use as colorants is known in the art. For example, Cu-chlorophyllin is sold as the sodium or potassium salt which is readily soluble in water. Cu-chlorophyll behaves very much like chlorophyll except that it is more brightly green and much more stable, i.e., copper is not easily displaced. At low pH, however, Cu-chlorophyllin precipitates as the insoluble protonated compound.

Numerous examples of the use of Cu-chlorophyllin as a dyestuff or colorant are known in the art. For example, sodium copper chlorophyllin is known as a dye for wool (Xiuliang, H.; Kuan, Z.; Guoying, Z.; Zhaonan, L.; Xiaofeng, H. J. Text. Res. 2010, 31, 95 - 99) and silk (Ping-Xiong, J. I.; Wei, Y. U. J. Food. Sci. 2012, 33, 119-122) fabrics.

Chinese Pat. Appl. No. CN201110164165 a method for dyeing cotton fabric with sodium copper chlorophyllin with improved color fastness. The method comprises using sophora japonica for pre-processing followed by chlorophyll copper salt dyeing.

Chinese Pat. Appl. No. CN201010529463 discloses a method for dyeing green silk fabrics by sodium copper chlorophyllin. The dyeing method is a direct dyeing method without using mordant.

International (PCT) Pat. Appl. Pub. No. WO2013/156853 discloses dispersible colorants that comprise a combination of a colorant and a polysaccharide. Sodium copper chlorophyllin is among the colorants disclosed.

International (PCT) Pat. Appl. Pub. No. WO2013/167644 discloses a green coloring composition suitable for use in food and pharmaceutical products that contains quillaja and copper chlorophyllin as a green pigment.

Zvezdina et al. (Zvezdina, S. V.; Berezin, M. B.; Berezin, B. D. Russ. J. Coord. Chem. 2010, 36, 711-714) disclosed the use of a number of water-soluble chlorophyll derivatives (including Cu salts thereof) for dyeing of cotton, wool, and acetate fibers.

No chlorophyll-based disperse dye is yet known in the art. As explained above, for fabrics such as polyesters, water-soluble dyes cannot be used, and the synthetic disperse dyes known in the art for dyeing polyesters tend to be extremely environmentally unfriendly. Thus, a chlorophyll-based disperse dye remains a long-felt, yet unmet, need.

### SUMMARY OF THE INVENTION

The present invention is provided to meet this unmet need. A family of chlorophyll-based disperse dyes and methods of their manufacture are disclosed. It is therefore one object of the present invention to disclose a disperse dye comprising as an active dyeing compound water-insoluble protonated M-chlorophyllin, where M represents a divalent metal cation. In some embodiments of the invention, M is selected from the group consisting of Mg²⁺, Cu²⁺, Fe²⁺, Zn²⁺, and Cd²⁺. In some preferred embodiments of the invention, M is selected from the group consisting of Mg²⁺ and Cu²⁺.

It is a further object of this invention to disclose a disperse dye comprising as an active dyeing compound water-insoluble protonated M-chlorophyllin, where M represents a divalent metal cation, wherein said dye comprises an aqueous dispersion of particles of said active dyeing compound, and said aqueous dispersion has a viscosity of between 0.5 and 5 Pa s. In some embodiments of the invention said aqueous dispersion has a pH of between 4 and 6. In some embodiments of the invention, said aqueous dispersion comprises 4 - 40% solids by weight.

In some particularly preferred embodiments of the invention, said aqueous dispersion comprises particles having an average size of not more than 1 µm.

In some particularly preferred embodiments of the invention, said aqueous dispersion has a viscosity of between 1 and 2 Pa s.

It is a further object of this invention to disclose a disperse dye comprising as an active dyeing compound water-insoluble protonated M-chlorophyllin, where M represents a divalent metal cation, wherein said dye comprises an aqueous dispersion of particles of said active dyeing compound and said aqueous dispersion is characterized by a filtering time of greater than 60 s as determined by AATCC test method 146-2001.

It is a further object of this invention to disclose a method of preparing a chlorophyll-based disperse dye, comprising: saponifying chlorophyll, thereby producing a water-soluble chlorophyllin salt; acidifying said water-soluble chlorophyllin salt, thereby producing a dispersion of water-insoluble protonated M-chlorophyllin active dyeing compound, where M is a divalent metal ion; and dispersing said water-insoluble protonated M-chlorophyllin active dyeing compound to produce an aqueous dispersion characterized by a viscosity of between 0.5 and 5 Pa s.

It is a further object of this invention to disclose a method for preparing a chlorophyll-based disperse dye as defined in any of the above, wherein said step of saponifying takes place at a temperature of between 30 and 70 °C under a vacuum of between 300 and 400 mbar and while mixing at 60 rpm.

It is a further object of this invention to disclose a method for preparing a chlorophyll-based disperse dye as defined in any of the above, wherein said step of acidifying comprises acidifying to a pH of between 3 and 7.

It is a further object of this invention to disclose a method for preparing a chlorophyll-based disperse dye as defined in any of the above, comprising crushing particles of said dispersion to produce an average size of not more than 1 µm.

It is a further object of this invention to disclose a method for preparing a chlorophyll-based disperse dye as defined in any of the above, wherein said step of acidifying comprises acidifying in the presence of 0.1 - 5% of a dispersing agent, under conditions selected from the group consisting of (a) mixing at not less than 1000 RPM and (b) acidifying in a homogenizer, until said dispersion comprises particles having an average size of not more than 10 µm.

It is a further object of this invention to disclose a method for preparing a chlorophyll-based disperse dye as defined in any of the above, wherein said step of dispersing comprises filtering said dispersion by vacuum filtration, thereby producing a wet solid, and adding water to said wet solid, thereby producing an aqueous dispersion.

It is a further object of this invention to disclose a method for preparing a chlorophyll-based disperse dye as defined in any of the above, comprising a step of substituting Mg²⁺ with a different divalent metal cation. In some particularly preferred embodiments of the invention, said step of substituting Mg²⁺ with a different divalent metal cation comprises substituting Mg²⁺ with Cu²⁺ subsequent to said step of saponifying, and comprises treating with an aqueous solution of a Cu(II) salt.

It is a further object of this invention to disclose a method for preparing a chlorophyll-based disperse dye as defined in any of the above, wherein said step of saponifying chlorophyll is preceded by: obtaining green plant biomass; and, extracting soluble components of said green plant biomass with an organic solvent, thereby producing an extract, and whereby said step of saponifying produces a saponified extract

It is a further object of this invention to disclose a method for preparing a chlorophyll-based disperse dye as defined in any of the above, comprising grinding said green plant biomass at a temperature not exceeding 30 °C prior to said step of extracting.

It is a further object of this invention to disclose a method for preparing a chlorophyll-based disperse dye as defined in any of the above, comprising removing half of said organic solvent contained in said extract by vacuum distillation at a temperature not exceeding 40 °C, thereby producing a concentrated extract.

It is a further object of this invention to disclose a method for preparing a chlorophyll-based disperse dye as defined in any of the above, comprising a step of removing organic solvent remaining after said step of saponifying.

It is a further object of this invention to disclose a method for preparing a chlorophyll-based disperse dye as defined in any of the above, additionally comprising adding water after said step of saponifying.

It is a further object of this invention to disclose a method for preparing a chlorophyll-based disperse dye as defined in any of the above, wherein said green plant biomass comprises biomass obtained from plants of the duckweed family.

### BRIEF DESCRIPTION OF THE DRAWINGS

The invention will now be described with reference to the drawings, wherein
FIG. **1** illustrates the mechanism of disperse dyeing as is known in the prior art;
FIG. **2** presents a UV-VIS absorption spectrum of a crude duckweed extract;
FIG. **3** presents UV-VIS absorption spectra of disperse dyes of the present invention that have been subject to heating;
FIG. **4** presents a graph showing temperature dependence of the ratio of the absorbances at 697 nm and 660 nm of an protonated Mg-chlorophyllin disperse dye;
FIG. **5** presents UV-VIS absorption spectra of natural disperse dyes containing protonated Mg-chlorophyllin and protonated Cu-chlorophyllin, respectively, as the active dyeing material;
FIG. **6** presents UV-VIS spectra of an protonated Cu-chlorophyllin disperse dye at different temperatures; and,
FIG. **7** presents the thermal cycle for dyeing polyester fabric with the dye disclosed in the present invention.

### DETAILED DESCRIPTION OF THE PREFERRED EMBODIMENTS

In the following description, various aspects of the invention will be described. For the purposes of explanation, specific details are set forth in order to provide a thorough understanding of the invention. It will be apparent to one skilled in the art that there are other embodiments of the invention that differ in details without affecting the essential nature thereof. Therefore the invention is not limited by that which is illustrated in the figure and described in the specification, but only as indicated in the accompanying claims, with the proper scope determined only by the broadest interpretation of said claims.

As used herein, the term "multi-component material" refers to a material comprising a mixture of high molecular weight and low molecular weight substances. Note that by this definition, a multi-component material may comprise not only one or more well-defined macromolecular substances mixed with one or more pure molecular substances, but it may comprise substances such as plant parts or even whole plants.

Unless specifically stated otherwise, concentrations of solutions and suspensions are given as w/v percentages.

The disperse dye of the present invention contains as the active dyeing compound a water-insoluble protonated M-chlorophyllin, where M represents a divalent metal ion. In preferred embodiments of the invention, M = Mg²⁺ or Cu²⁺, but any suitable divalent metal (e.g. Fe²⁺, Zn²⁺, Cd²⁺, etc.) may be used. Unlike chlorophyllin-based dyes known in the art, the dye of the present invention is suitable for dyeing of hydrophobic fibers such as polyester.

In preferred embodiments of the invention, the dye is in the form of water-insoluble particles made of multi-component material that includes the water-insoluble protonated M-chlorophyllin. In some preferred embodiments of the invention, the dye comprises an aqueous dispersion of particles of the active dyeing compound. In preferred embodiments, the average particle size is not more than 10 µm. In more preferred embodiments, the average particle size is not more than 5 µm. In yet more preferred embodiments, the average particle size is not more than 2 µm. In the most preferred embodiments, the average particle size is not more than 1 µm. In preferred embodiments of the invention, the dispersion comprises between 2 and 40% solids by weight. In preferred embodiments of the invention, the dispersion has a viscosity of between 0.5 and 5 Pa s and a filtering time of greater than 60 s as determined by AATCC test method 146-2001. Methods of preparation of a dye having these physical properties are given in detail below.

It is also within the scope of the invention to disclose a method of preparation of the protonated M-chlorophyllin disperse dye. In one exemplary embodiment of the present invention, the disperse dye is produced by saponification of chlorophyll, which hydrolyzes the ester moities bound to the chlorin ring system, releasing phytol and methanol and yielding a water-soluble Mg-chlorophyllin salt. The water-soluble chlorophyllin salt is then acidified, yielding a water-insoluble protonated Mg-chlorophyllin, which precipitates from the aqueous medium in the form of a solid material with a low tendency to agglomerate.

A non-limiting illustration of the above reaction sequence is shown in Scheme 3 for an embodiment in which the dye is based on chlorophyll a.

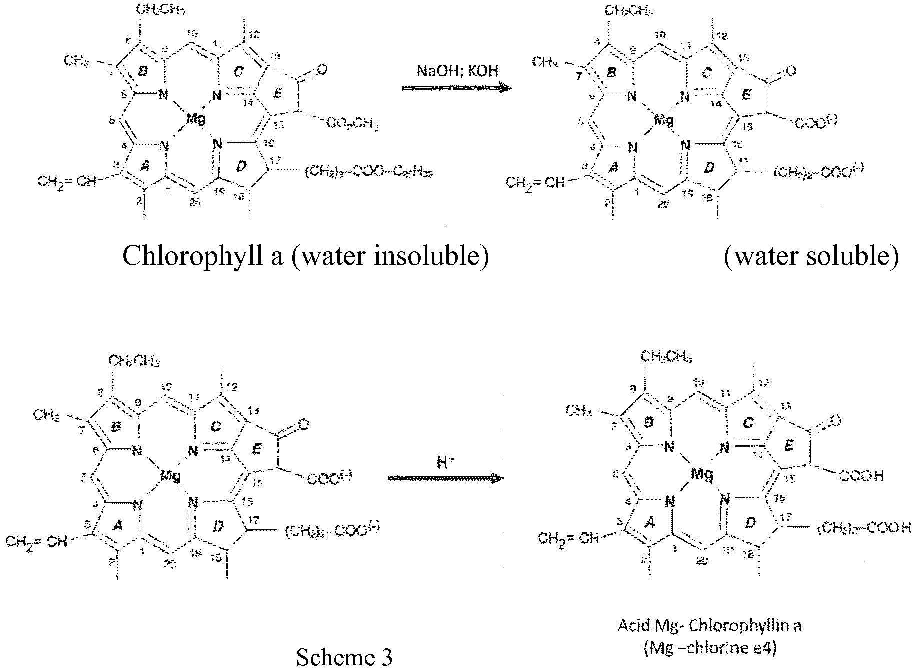

In some embodiments of the invention, the Mg atom is replaced with an atom of a different metal. Non-limiting examples include Cu, Zn, Fe, and Cd. In preferred embodiments of the invention, the Mg atom is replaced by a Cu atom. A non-limiting example of a method by which the Mg atom (again, for an embodiment in which the dye is based on chlorophyll a) is presented in Scheme 4.

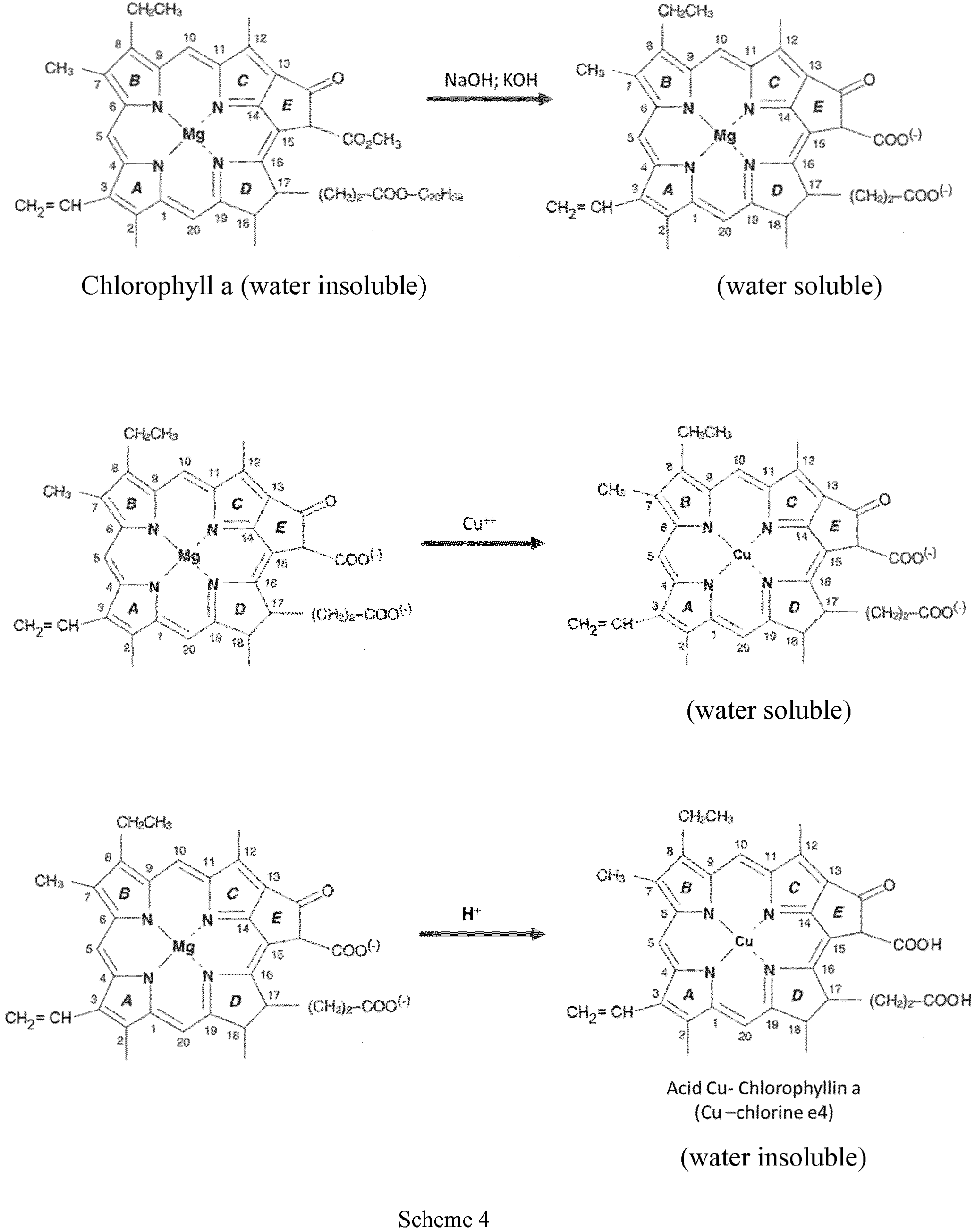

Green plant biomass serves as the source of the chlorophyll that is modified to produce the disperse dye of the present invention. It is therefore within the scope of the invention to disclose a method for producing the disperse dye from green plant biomass.

Any source of green plant biomass having a chlorophyll content of greater than 1% relative to the total dry matter may be used. The biomass may be either fresh or dried. A preferred source of plant biomass is aquatic plants from the duckweed family (Lemnoideae). A more preferred source of plant biomass is plants belonging to the genus Wolffia, due to their high chlorophyll content (4 - 7% by weight on a dry weight basis).

While fresh plant biomass can be used, in preferred embodiments, the plant biomass is dried prior to extraction of the pigment. In preferred embodiments, the biomass is dried in the dark; any process or equipment known in the art can be used. The temperature should not exceed 50 °C during the drying process. In preferred embodiments, the drying takes place at a temperature not exceeding 45 °C. In the most preferred embodiments, the drying takes place at a temperature not exceeding 40 °C. Drying at low temperatures is preferred in order to prevent or limit thermal degradation of the plant pigments to be extracted. In some embodiments, the drying is performed until the moisture content of the biomass is between 10 and 15% by weight. In other embodiments, the drying is performed until the moisture content of the biomass is between 5 and 10% by weight. In yet other embodiments, the drying is performed until the moisture content of the biomass is between 2 and 4% by weight.

In preferred embodiments of the invention, the dried plant matter is ground, in order to mechanically disrupt the plant cells and increase the efficiency of the extraction of the pigment. The grinding may be performed using any method or apparatus known in the art. In preferred embodiments, a ball mill is used, preferably one that is equipped with a cooling system such that the temperature during the grinding does not exceed 30 °C. In preferred embodiments of the invention, the plant matter is ground until the maximum size of the particles is not more than 200 µm. In more preferred embodiments, the plant matter is ground until the maximum size of the particles is not more than 150 µm. In the most preferred embodiments, the plant matter is ground until the maximum size of the particles is not more than 100 µm.

Extraction of pigment from the plant matter can be performed by any process known in the art. In preferred embodiments, organic solvents that are miscible with water are used. Non-limiting examples of such embodiments include alcohols, ketones, esters, ethers, and other polar aprotic solvents such as dimethyl formamide (DMF) or dimethyl sulfoxide (DMSO). In the most preferred embodiments, the pigment is extracted with ethanol. In some embodiments of the invention, the ratio of biomass to solvent is 1:20 (w/v). In preferred embodiments of the invention, the ratio of biomass to solvent is 1:25 (w/v). In more preferred embodiments of the invention, the ratio of biomass to solvent is 1:30 (w/v).

In preferred embodiments of the invention, a batch extraction procedure is used. In more preferred embodiments of the invention, Soxhlet extraction under vacuum is performed. In some embodiments of the invention, the extraction is performed between 50 and 70 °C. In other embodiments of the invention, the extraction is performed between 40 and 60 °C. In yet other embodiments of the invention, the extraction is performed between 30 and 50 °C.

In general, the extraction is performed until the concentration of pigment in the solvent leaving the extractor reaches a predetermined value. In preferred embodiments of the invention, the reflux flow within the extractor is periodically microsampled and analyzed for pigment concentration. The extraction is stopped when the concentration of pigment is less than 0.02 g/L as determined spectrophotometrically by ESS method 150.1. In preferred embodiments, the extract has a concentration of 0.2 to 2% by weight of plant biomass. In typical embodiments of the invention, the concentration of pigment in the extract, expressed as total chlorophyll (a + b), is between 1 and 3% relative to the total dry weight of the extracted plant matter (i.e. the extract contains between 0.002 and 0.06% pigment (w/v)). In other embodiments of the invention, the concentration of pigment in the extract, expressed as total chlorophyll (a + b), is between 1.5 and 3.5% relative to the total dry weight of the extracted plant matter (i.e. the extract contains between 0.003 and 0.07% pigment (w/v)). In yet other embodiments of the invention, the concentration of pigment in the extract, expressed as total chlorophyll (a + b), is between 2 and 4% relative to the total dry weight of the extracted plant matter (i.e. the extract contains between 0.004 and 0.08% pigment (w/v)).

In preferred embodiments of the invention, the extract is concentrated by vacuum distillation, more preferably at a temperature not exceeding 40 °C, until about half of the solvent is removed.

The extract (in preferred embodiments, the concentrated extract) is then saponified. Any method known in the art may be used. In preferred embodiments of the invention, an aqueous solution of LiOH, NaOH, or KOH is used to perform the saponification. In more preferred embodiments of the invention, a 10% solution (w/v) of base is used. In more preferred embodiments of the invention, the base used is KOH. In typical embodiments of the invention, the amount of base added to the extract in order to perform the saponification is 50 - 90% w/w relative to the amount of plant matter in the extract (dry basis). In preferred embodiments, the amount of base added is 55 - 85% w/w relative to the amount of plant matter in the extract (dry basis). In yet more preferred embodiments, the amount of base added is 60 - 80% w/w relative to the amount of plant matter in the extract (dry basis).

The saponification is typically performed at a temperature between 30 and 70 °C. In preferred embodiments, it is performed at a temperature between 35 and 65 °C. In more preferred embodiments, it is performed at a temperature between 40 and 60 °C. In typical embodiments, the saponification is run for 20 - 90 minutes. In preferred embodiments, it is run for 30 - 75 minutes. In more preferred embodiments, it is run for 40 - 60 minutes. In preferred embodiments, the saponification is performed under mixing (typically at about 60 rpm) and under vacuum (typically 30 - 40 kPa). Following the saponification, the remaining solvent is removed under vacuum, leaving saponified material. Water is then added to the material remaining after the removal of the solvent. In some embodiments of the invention, sufficient water is added such that the concentration of saponified material is between 12 and 16% w/w. In other embodiments of the invention, sufficient water is added such that the concentration of saponified material is between 13 and 17% w/w. In yet other embodiments of the invention, sufficient water is added such that the concentration of saponified material is between 14 and 18% w/w. The amount of residual solvent in the resulting solution is generally less than 2%.

The saponified material is then acidified. In typical embodiments of the invention, acid is added until the pH is between 3 and 7. In preferred embodiments of the invention, acid is added until the pH is between 3.5 and 6.5. In more preferred embodiments of the invention, acid is added until the pH is between 4 and 6. In some preferred embodiments of the invention, the acidification is performed by addition of HCl or acetic acid. In more preferred embodiments of the invention, the acidification is performed by addition of 10% (w/v) acetic acid.

As shown in Scheme 3 above, acidification of the saponification product produces water-insoluble protonated M-chlorophyllin. The acidification normally produces the protonated M-chlorophyllin in the form of a dispersion. This dispersion is treated by filtration under vacuum. In some embodiments of the invention, the filtrate has a solid content of 0.05 - 0.8% by weight. In some preferred embodiments of the invention, the filtrate has a solid content of 0.05 - 0.5% by weight. In some more preferred embodiments of the invention, the filtrate has a solid content of 0.05 - 0.2% by weight.

In some embodiments of the invention, is dried to powder. In other embodiments of the invention, the wet filtrate is mixed with a predetermined quantity of water. In some embodiments of the invention in which the wet filtrate is mixed with water, the ratio of wet solid to added water is 1 : 4 by weight. In preferred embodiments of the invention, the ratio of wet solid to added water is 1 : 3 by weight. In more preferred embodiments of the invention, the ratio of wet solid to added water is 1 : 2 by weight. In some embodiments, the resulting dispersion will thus comprise between 2 and 40% active dye material. In other embodiments, the resulting dispersion will comprise between 3 and 30% active dye material. In yet other embodiments, the resulting dispersion will comprise between 4 and 20% active dye material.

In preferred embodiments, the dispersion is treated to reduce the average particle size. The comminution may be performed by any means known in the art. Preferred methods include crushing or griding in a ball mill or high speed homogenizer. In typical embodiments of the invention, the comminution yields an average particle size of not more than 10 µm. In preferred embodiments of the invention, the comminution is performed until the average particle size is not more than 5 µm. In more preferred embodiments of the invention, the comminution is performed until the average particle size is not more than 2 µm. In the most preferred embodiments of the invention, the comminution is performed until the average particle size is not more than 1 µm.

The viscosity of the resulting natural disperse dye is typically between 0.5 and 5 Pa s. In preferred embodiments, the viscosity is between 0.75 and 3 Pa s. In more preferred embodiments, the viscosity is between 1 and 2 Pa s. The dispersibility of the disperse dye, as measured by filtering time, is typically greater than 60 s. In preferred embodiments, it is greater than 80 s. In more preferred embodiments, it is greater than 100 s. In practice, if a particular batch of the dye is not within the above limits for viscosity and dispersibility, the batch is rejected.

As shown in Scheme 4 above, in some embodiments of the invention, the Mg²⁺ present in naturally-occurring chlorophyllin is replaced by a different divalent metal cation. non-limiting examples of appropriate divalent metal ions include Fe²⁺, Cu²⁺, Zn²⁺, and Cd²⁺. In a preferred embodiment of the invention, the active dye material contains Cu²⁺, which provides a bright green color. In preferred embodiments of the invention, the substitution of Mg²⁺ with another divalent metal cation is performed after saponification but before acidification of the saponified material. In general, the substitution is performed by treatment of the saponified material by reaction with an aqueous solution of a salt of the cation that is substituting the Mg²⁺.

As a non-limiting example of how the substitution is performed, one embodiment of a method for substituting the Mg²⁺ with Cu²⁺ is given here. The aqueous solution of saponified plant extract is treated with an aqueous solution of a copper(II) salt. In preferred embodiments of the invention, the copper(II) salt is selected from the group consisting of copper(II) acetate, copper(II) sulfate, copper(II) nitrate, and copper(II) chloride. In the most preferred embodiments of the invention, CuSO₄•5H₂O is used.

In typical embodiments of the invention, sufficient solution of the copper(II) salt is added to the solution containing the saponification product to provide 2 - 3% by weight of the copper(II) salt (dry basis of salt relative to the extract) is used. In other embodiments of the invention, 2.5 - 3.5% by weight of the copper(II) salt (dry basis of salt relative to the extract) is provided. In yet other embodiments of the invention, 3 - 4% by weight of the copper(II) salt (dry basis of salt relative to the extract) is provided.

In some embodiments of the invention, the reaction between the copper(II) salt and the saponification product takes place at a temperature between 35 and 45 °C. In other embodiments of the invention, the reaction takes place at a temperature between 40 and 55 °C. In yet other embodiments of the invention, the reaction takes place at a temperature between 45 and 65 °C. The reaction is typically run for 20 to 120 minutes. In preferred embodiments of the invention, the reaction is run for 30 to 100 minutes. In more preferred embodiments of the invention, the reaction is run for 40 to 80 minutes. After the reaction is run, steps of acidification and subsequent treatment are performed as described above.

Typically, in order to determine whether the reaction is complete, the amount of Cu(II) remaining in solution is monitored. When the reaction has reached equilibrium (typically after about 30 min), it is deemed to have reached its end point.

As discussed above, the substitution of Mg²⁺ with a divalent cation other than Cu²⁺ is contemplated by the inventors as being within the scope of the invention. One of ordinary skill in the art will understand that in order to replace the Mg²⁺ with a cation other than Cu²⁺, an analogous method using a salt of a different method is performed.

### EXAMPLES

The following non-limiting examples are provided to illustrate to a person having ordinary skill in the art how to make and use the invention herein disclosed.

### Example 1

A non-limiting example of the process for obtaining a natural disperse dye, in which the active dyeing compound is protonated Mg-chlorophyllin, is now presented.

Fresh green plant biomass of *Wolffia arrhiza*, which had the chemical composition presented in Table 1, was obtained.

**Table 1. Chemical composition of fresh**

| *Wolffia arrhiza* | | |
|---|---|---|
| Compound | UM | Values |
| Water | % | 94.73 |
| Protein | % | 1.97 |
| Total Fat | % | 0.24 |
| Total Carbohydrate | % | 2.09 |
| Ash | % | 0.71 |
| Sodium | mg/100g | 29.53 |
| Potassium | mg/100g | 161.38 |
| Magnesium | mg/100g | 21.32 |
| Copper | mg/100g | 0.49 |

2 kg fresh harvested duckweed was dried at 40 °C for 24 hours in a EZIDRI ULTRA FD 1000 (Food Dehydrators, Israel) drier, which was kept in the dark. 109.2 g of dried biomass with a moisture content of 3.67 percent was obtained.

The dried biomass was chopped with a disc mill (WEGA coffee grinder, Italy) to yield a powder with a maximum particle size of 150 microns.

90 g of the dry biomass powder then was extracted with ethanol under vacuum in the dark in a battery of 6 Soxhlet extractors, each of which had a 100 ml capacity. Each thimble was loaded with 15 g powder, 250 ml of ethanol (99%) was introduced into a 500 ml extraction flask. The extraction was run at a temperature of 50 °C for 3 hours. 1500 ml of extract of 1.05% w/v concentration (total solid 15.75 g) was obtained.

The chlorophyll (a+b) content of the crude extract was characterized by the method of Lichtenthaler (Lichtenthaler, H. K. Method Enzymol. 1987, 148, 350-382; Ritchie, R. J. Photosynth. Res. 2006, 89, 27-41), using a Cary 60 UV-VIS spectrophotometer, and a value of 2.92% green pigment by dry mass of extract was obtained. The UV-VIS spectrum of the extract is presented in FIG. **2****.** The presence of absorbances at 414 nm and 665 nm shows the presence of chlorophyll in a mixture with other substances categories of combinations (other pigments, proteins, polysaccharides, etc.).

750 ml of ethanol were removed from the extract by vacuum distillation at a temperature of 50 °C using a Buchi R-134 rotary evaporator. A solution of 11.81g of KOH in 173 ml distilled water was then added. Removal of ethanol continued in for an additional 60 minutes at 50 °C and a pressure of 330 mbar. A uniform solution of green intense color with a concentration of 16.01% was obtained.

The saponified extract was then acidified by addition of 12 ml of a 10% (w/v) acetic acid solution until a pH of 5.5 was reached. The resulting dispersion, which did not show any aggregation, was filtered under vacuum. 167.3 g of liquid and 45.26 g wet filtrate were obtained. The wet filtrate was diluted with 54.74 ml of distilled water resulting in 100 g of concentrated dispersion. This dispersion was subjected to additional dispersal using an Ultra Turax homogenizer at 20,000 rpm for 15 seconds.

Finally, 96 g natural disperse dye was obtained (some of the dye was lost on transfer to and removal from the homogenizer), comprising protonated Mg-chlorophyllin as the active dyeing ingredient. The dye had a pH of 5.73, a viscosity of 1.852 Pa s (as measured by using a MYR VR-3000 viscometer) and dispersability of 89 sec as determined by AATCC test method 146-2001.

### Example 2

The thermal stability of a disperse dye containing protonated Mg-chlorophyllin as the active dyeing material was determined under thermal conditions near those that are used for dyeing of polyester fabrics.

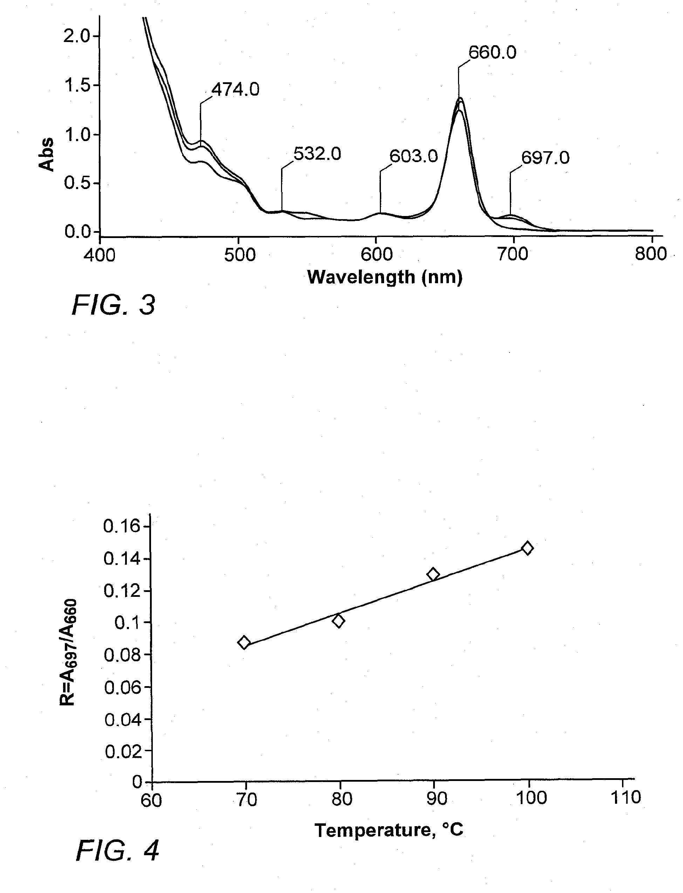

10 g of an aqueous Mg-chlorophyllin dispersion was added to a 50 ml glass Erlenmeyer flask fitted with a stopper, sealing system with spring, and magnetic stir bar. The flasks were immersed for 60 min in a preheated water bath placed on a heating plate equipped with a magnetic stirrer. The dispersion was cooled to room temperature and the disperse phase separated from the dispersion medium by filtration under vacuum. The wet filtrate was then redissolved in ethanol, and the resulting solution resulted was analyzed by UV-VIS spectroscopy. The experiment was performed four times, at 70 °C, 80 °C, 90 °C, and 100 °C, respectively. The experimental results are shown in FIGs. **3** and **4****.**

Reference is now made to FIG. **3**, which presents spectra demonstrating that the samples that have undergone heat treatment have UV-VIS absorbance spectra that differ from the spectrum of an unheated sample. In particular, a new absorbance at 697 nm appears in the spectra of the heated samples, indicating that the pigment has degraded to some extent.

Reference is now made to FIG. **4**, which presents a graph showing the temperature dependence of the ratio of the absorbances at 697 nm and 660 nm (R = A₆₉₇/A₆₆₀). R is linearly dependent on the temperature, suggesting that the degradation will be more pronounced at temperatures greater than over 100 °C. Based on the UV-VIS spectra, it is expected that the color will move from green to yellow-brown as the dye is heated.

### Example 3

A non-limiting method for obtaining a natural disperse dye, in which the active dyeing compound is protonated Cu-chlorophyllin, is presented.

An aqueous solution saponified plant extract was obtained using the same source of plant biomass and the same processing method as were given in Example 1 above.

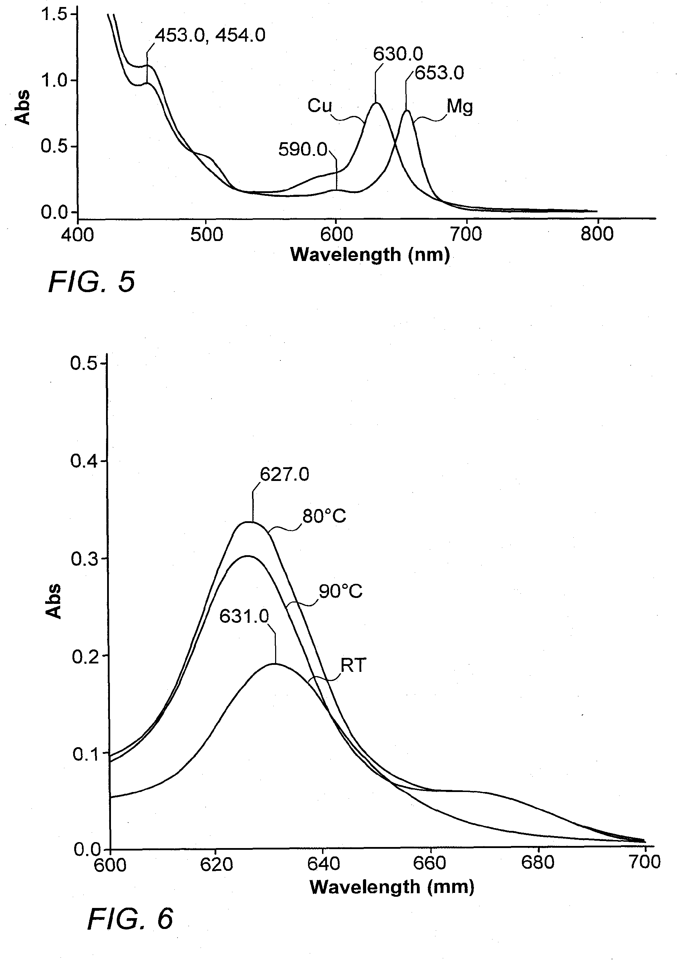

4 ml of a 20% (w/v) solution of CuSO₄•5H₂O was added directly into the flask of rotary evaporator containing the solution of saponified extract. The solutions were mixed at 60 rpm for 60 min at 56 °C under a pressure of 850 mbar. Reference is now made to FIG. 5, which presents a UV-VIS spectrum of the resulting dye. As can be seen from the figure, upon substitution of Mg²⁺ by Cu²⁺, the absorption peak at 653 nm moves to 630 nm, corresponding to a color change from yellow-green to blue-green.

The resulting solution of is processed as described in example 1 above except that 10 ml of a fatty acid ethoxylate dispersing agent (SETAVIN PE) was added.

97.8 g of a natural disperse dye containing protonated Cu-chlorophyllin as the active dyeing material was obtained. The dye had a pH of 5.68, a viscosity of 3.144 Pa s, and dispersability of 106 sec as determined by AATCC test method 146-2001.

Thermal stability tests identical to those described in Example 2 above were performed on the Cu-chlorophyllin based dye. Reference is now made to FIG. **6**, which presents UV-VIS spectra of dye that has undergone thermal treatment. The spectra shown in the figure demonstrate that protonated Cu-chlorophyllin has a much better thermal stability than Mg-chlorophyllin. The spectra shown in FIG. **6** reveal that on heating, a new absorption band at 665-675 nm appears, concomitant with a blue shift in the peak of the major absorption band from 631 nm to 627 nm). As the temperature increases, the intensity of the absorbance at 627 nm decreases slightly, suggesting that the dye degrades slightly at high temperature.

### Example 4

A non-limiting example of the use on polyester of a natural disperse dye with protonated Cu-chlorophyllin as the active dyeing compound is presented. The dye was prepared as described in Example 2 above.

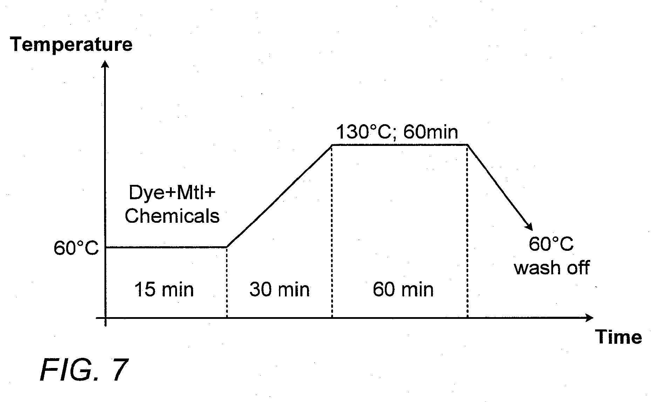

500 ml vessels of an AHIBA DATACOLOR IR™ beaker dyeing machine were charged with 10 g of polyester fabric and 400 ml of a dispersion of the natural disperse dye (1:40 liquor ratio) containing 1, 0.5, 0.25, and 0.125 g/l of disperse dye, corresponding to 4%, 2%, 0.5% and 0.25% dye on weight of fabric (OWF), respectively. The dye vessels were heated to 130 °C. The fabrics were then dyed at 130 °C for 1 hour, cooled to 60 °C over the course of 30 minutes, removed from the dye vessels, rinsed with water at 60 °C for 15 minutes, and dried at 105 °C. Reference is now made to FIG. **7**, which presents the thermal program used to dye polyester fabrics.

The dyed fabrics were laundered at 60 °C using the AATCC standard procedure for home laundry. Nearly full exhaustion was obtained (>90% exhaustion as measured by gravimetry of applied versus unbound pigment concentrations). The dyed cloth had a khaki/green shade with a clear gradation of color depth according to dyebath concentration from a light shades for 0.25% and 0.5% OWF to medium shades for 2% and 4% OWF (CIE LCH parameters = (L: 97.1, C: 12.2, H: 105.8) ; (L: 90.3, C: 45.8, H: 101.3) ; (L: 83.7, C: 74.3, H: 97.6) ; (L: 69.3, C: 68.7, H: 96.7), respectively.). The fabrics were durable to laundry with no significant color change (dE<1).

## Claims

1. A disperse dye comprising as an active dyeing compound water-insoluble protonated M- chlorophyllin, where M represents a divalent metal cation, **characterized in that**:
said dye comprises an aqueous dispersion of particles of said active dyeing compound and,
said aqueous dispersion has a viscosity of between 0.5 and 5 Pa s.

2. The disperse dye according to claim 1, **characterized in that** M is selected from the group consisting of Mg²⁺, Cu²⁺, Fe²⁺, Zn²⁺, and Cd²⁺.

3. The disperse dye according to claim 1, **characterized in that** said aqueous dispersion is **characterized by** at least one characteristic selected from the group consisting of:
said aqueous dispersion has a pH of between 4 and 6;
said aqueous dispersion comprises particles having an average size of not more than 1 µm ;
said aqueous dispersion comprises 4 - 40% solids by weight;
said aqueous dispersion has a viscosity of between 1 and 2 Pa s; and,
said aqueous dispersion is **characterized by** a filtering time of greater than 60 s as determined by AATCC test method 146-2001.

4. A method of preparing a chlorophyll-based disperse dye, according to claim 1 **characterized in that** said method comprises:
saponifying chlorophyll, thereby producing a water-soluble chlorophyllin salt; acidifying said water-soluble chlorophyllin salt, thereby producing a dispersion of water-insoluble protonated M-chlorophyllin active dyeing compound, where M is a divalent metal ion; and,
dispersing said water-insoluble protonated M-chlorophyllin active dyeing compound to produce an aqueous dispersion **characterized by** a viscosity of between 0.5 and 5 Pa s.

5. The method according to claim 4, **characterized in that** said step of saponifying takes place at a temperature of between 30 and 70 °C under a vacuum of between 300 and 400 mbar and while mixing at 60 rpm.

6. The method according to claim 4, **characterized in that** said step of acidifying comprises at least one step selected from the group consisting of:
acidifying to a pH of between 3 and 7; and,
acidifying in the presence of 0.1 - 5% of a dispersing agent, under conditions selected from the group consisting of (a) mixing at not less than 1000 RPM and (b) acidifying in a homogenizer, until said dispersion comprises particles having an average size of not more than 10 µm.

7. The method according to claim 4, **characterized in that** said method comprises crushing particles of said dispersion to produce an average size of not more than 1 µm.

8. The method according to claim 4, **characterized in that** said step of dispersing comprises:
filtering said dispersion by vacuum filtration, thereby producing a wet solid; and,
adding water to said wet solid, thereby producing an aqueous dispersion.

9. The method according to claim 4, **characterized in that** said method comprises a step of substituting Mg²⁺ with a different divalent metal cation.

10. The method according to claim 9, **characterized in that** said step of substituting Mg²⁺ with a different divalent metal cation comprises substituting Mg²⁺ with Cu²⁺ subsequent to said step of saponifying by treatment with an aqueous solution of a Cu(II) salt.

11. The method according to claim 4, **characterized in that** said step of saponifying chlorophyll is preceded by:
obtaining green plant biomass; and,
extracting soluble components of said green plant biomass with an organic solvent, thereby producing an extract, whereby said step of saponifying produces a saponified extract.

12. The method according to claim 11, **characterized in that** said method comprises at least one step selected from the group consisting of:
grinding said green plant biomass at a temperature not exceeding 30 °C prior to said step of extracting; and,
adding water after said step of saponifying.

13. The method according to claim 11, **characterized in that** said method comprises at least one step selected from the group consisting of:
removing organic solvent remaining after said step of saponifying; and,
removing half of said organic solvent contained in said extract by vacuum distillation at a temperature not exceeding 40 °C, thereby producing a concentrated extract.

14. The method according to claim 11, **characterized in that** said green plant biomass comprises biomass obtained from plants of the duckweed family.

## Patentansprüche

1. Dispersionsfarbstoff, der als aktive Färbeverbindung wasserunlösliches protoniertes M-Chlorophyllin enthält, wobei M ein zweiwertiges Metallkation darstellt, **dadurch gekennzeichnet, dass**
der Farbstoff eine wässrige Dispersion von Teilchen der aktiven Färbeverbindung enthält und
die wässrige Dispersion eine Viskosität zwischen 0,5 und 5 Pa s aufweist.

2. Dispersionsfarbstoff nach Anspruch 1, **dadurch gekennzeichnet, dass** M aus der Gruppe ausgewählt wurde, die aus Mg²⁺, Cu²⁺, Fe²⁺, Zn²⁺, and Cd²⁺ besteht.

3. Dispersionsfarbstoff nach Anspruch 1, **dadurch gekennzeichnet, dass** die wässrige Dispersion durch mindestens eine Eigenschaft der folgenden Eigenschaften gekennzeichnet ist:
die wässrige Dispersion hat einen pH-Wert zwischen 4 und 6;
die wässrige Dispersion enthält Partikel mit einer durchschnittlichen Größe von nicht mehr als 1 µm;
die wässrige enthält Dispersion enthält 4-40 Gew.-% Feststoff;
die wässrige hat Dispersion eine Viskosität zwischen 1 und 2 Pa s;
die wässrige Dispersion ist durch eine Filterzeit von mehr als 60 s gekennzeichnet, wie von der AATCC-Testmethode 146-2001 festgelegt.

4. Verfahren zur Herstellung eines Dispersionsfarbstoffs auf Chlorophyllbasis nach Anspruch 1, **dadurch gekennzeichnet, dass** das Verfahren Folgendes umfasst:
Verseifen von Chlorophyll, wodurch ein wasserlösliches Chlorophyllin-Salz hergestellt wird; Ansäuern des wasserlöslichen Chlorophyllin-Salzes, wodurch eine Dispersion einer wasserunlöslichen protonierten M-Chlorophyllin aktiven Färbeverbindung hergestellt wird, wobei M ein zweiwertiges Metallion ist; und
Dispergieren der wasserunlöslichen protonierten M-Chlorophyllin aktiven Färbeverbindung zur Herstellung einer wässrigen Dispersion, die durch eine Viskosität zwischen 0,5 und 5 Pa s gekennzeichnet ist.

5. Verfahren nach Anspruch 4, **dadurch gekennzeichnet, dass** der Schritt des Verseifens bei einer Temperatur zwischen 30 und 70 °C unter einem Vakuum zwischen 300 und 400 mbar unter Mischen bei 60 U/min erfolgt.

6. Verfahren nach Anspruch 4, **dadurch gekennzeichnet, dass** der Schritt des Ansäuerns mindestens eine der folgenden Schritte umfasst:
Ansäuern auf einen pH-Wert zwischen 3 und 7;
Ansäuern in Gegenwart von 0,1-5 % eines Dispergiermittels unter Bedingungen, ausgewählt aus: (a) Mischen bei nicht weniger als 1000 U/min und (b) Ansäuern in einem Homogenisator, bis die Dispersion Partikel mit einer durchschnittlichen Größe von nicht mehr als 10 µm umfasst.

7. Verfahren nach Anspruch 4, **dadurch gekennzeichnet, dass** das Verfahren das Zerkleinern von Teilchen der Dispersion umfasst, um eine durchschnittliche Größe von nicht mehr als 1 µm zu erzeugen.

8. Verfahren nach Anspruch 4, **dadurch gekennzeichnet, dass** der Schritt des Dispergierens Folgendes umfasst:
Filtern der Dispersion durch Vakuumfiltration, wodurch ein nasser Feststoff erzeugt wird und Zugabe von Wasser zu dem nassen Feststoff, wodurch eine wässrige Dispersion erzeugt wird.

9. Verfahren nach Anspruch 4, **dadurch gekennzeichnet, dass** das Verfahren einen Schritt des Ersetzens von Mg²⁺ durch ein anderes zweiwertiges Metallkation umfasst.

10. Verfahren nach Anspruch 9, **dadurch gekennzeichnet, dass** der Schritt des Ersetzens von Mg²⁺ durch ein anderes zweiwertiges Metallkation das Ersetzen von Mg²⁺ durch Cu²⁺ nach dem Schritt des Verseifens durch Behandlung mit einer wässrigen Lösung eines Cu(II)-Salzes umfasst.

11. Verfahren nach Anspruch 4, **dadurch gekennzeichnet, dass** dem Schritt des Verseifens von Chlorophyll Folgendes vorausgeht:
Gewinnen von Biomasse aus Grünpflanzen;
Extrahieren von löslichen Bestandteilen der Biomasse aus Grünpflanzen mit einem organischen Lösungsmittel, wodurch ein Extrakt hergestellt wird, wobei der Schritt des Verseifens ein verseiftes Extrakt ergibt.

12. Verfahren nach Anspruch 11, **dadurch gekennzeichnet, dass** das Verfahren mindestens eine der folgenden Schritte umfasst:
Zerkleinern der Biomasse aus Grünpflanzen vor dem genannten Extraktionsschritt bei einer Temperatur von höchstens 30 °C und
Hinzufügen von Wasser nach dem genannten Schritt der Verseifung.

13. Verfahren nach Anspruch 11, **dadurch gekennzeichnet, dass** das Verfahren mindestens eine der folgenden Schritte umfasst:
Entfernen des nach dem Verseifungsschritt verbleibenden organischen Lösungsmittels und
Entfernen der Hälfte des in dem Extrakt enthaltenen organischen Lösungsmittels durch Vakuumdestillation bei einer Temperatur von höchstens 40 °C, wodurch ein konzentriertes Extrakt entsteht.

14. Verfahren nach Anspruch 11, **dadurch gekennzeichnet, dass** die Biomasse aus Grünpflanzen aus Biomasse besteht, die aus Pflanzen der Familie der Wasserlinsen gewonnen wird.

## Revendications

1. Colorant dispersé comprenant, à titre de composé actif de coloration, de la M-chlorophylline protonée insoluble dans l'eau dans laquelle M représente un cation métallique divalent, **caractérisé en ce que** :
ledit colorant comprend une dispersion aqueuse de particules dudit composé actif de coloration ; et
ladite dispersion aqueuse possède une viscosité entre 0,5 et 5 Pa.s.

2. Colorant dispersé selon la revendication 1, **caractérisé en ce que** M est choisi parmi le groupe constitué par Mg²⁺, Cu²⁺, Fe²⁺, Zn²⁺, et Cd²⁺.

3. Colorant dispersé selon la revendication 1, **caractérisé en ce que** ladite dispersion aqueuse est **caractérisée par** au moins une caractéristique choisie parmi le groupe constitué par le fait que :
ladite dispersion aqueuse possède un pH entre 4 et 6 ;
ladite dispersion aqueuse comprend des particules dont la granulométrie moyenne n'est pas supérieure à 1 µm ;
ladite dispersion aqueuse comprend de 4 à 40 % de produits solides en poids ;
ladite dispersion aqueuse possède une viscosité entre 1 et 2 Pa.s ; et
ladite dispersion aqueuse est **caractérisée par** un temps de filtration supérieur à 60 secondes comme déterminé par le procédé d'essai AATCC 146-2001.

4. Procédé de préparation d'un colorant dispersé à base de chlorophylle, selon la revendication 1, **caractérisé en ce que** ledit procédé comprend le fait de :
soumettre de la chlorophylle à une saponification, pour ainsi obtenir un sel de chlorophylline soluble dans l'eau ;
soumettre à une acidification ledit sel de chlorophylline soluble dans l'eau, pour ainsi obtenir une dispersion d'un composé actif de coloration insoluble dans l'eau à base de M-chlorophylline protonée, dans laquelle M représente un ion métallique divalent ; et
mettre en dispersion ledit composé actif de coloration insoluble dans l'eau à base de M-chlorophylline protonée afin d'obtenir une dispersion aqueuse **caractérisée par** une viscosité qui se situe entre 0,5 et 5 Pa.s.

5. Procédé selon la revendication 4, **caractérisé en ce que** ladite étape de saponification a lieu à une température entre 30 et 70° C sous un vide qui se situe entre 300 et 400 mbar et tout en mélangeant à raison de 60 tours/minute.

6. Procédé selon la revendication 4, **caractérisé en ce que** ladite étape d'acidification comprend au moins une étape choisie parmi le groupe constitué par :
une acidification jusqu'à un pH qui se situe entre 3 et 7 ; et
une acidification en présence de 0,1 à 5 % d'un agent de mise en dispersion, dans des conditions choisies parmi le groupe constitué par le fait de : (a) mélanger à une vitesse qui n'est pas inférieure à 1000 tours/minute ; et (b) acidifier dans un homogénéiseur jusqu'à ce que ladite dispersion comprenne des particules dont la granulométrie moyenne n'est pas supérieure à 10 µm.

7. Procédé selon la revendication 4, **caractérisé en ce que** ledit procédé comprend le fait de broyer des particules de ladite dispersion afin d'obtenir une granulométrie moyenne qui n'est pas supérieure à 1 µm.

8. Procédé selon la revendication 4, **caractérisé en ce que** ladite étape de mise en dispersion comprend le fait de :
filtrer ladite dispersion par l'intermédiaire d'une filtration sous vide, pour ainsi obtenir un produit solide humide ; et
ajouter de l'eau audit produit solide humide pour ainsi obtenir une dispersion aqueuse.

9. Procédé selon la revendication 4, **caractérisé en ce que** ledit procédé comprend une étape consistant à substituer au Mg²⁺ un cation métallique divalent différent.

10. Procédé selon la revendication 9, **caractérisé en ce que** ladite étape de substitution d'un cation métallique divalent différent au Mg²⁺ comprend le fait de substituer du Cu²⁺ au Mg²⁺ à la suite de ladite étape de saponification, par l'intermédiaire d'un traitement avec une solution aqueuse d'un sel de Cu(II).

11. Procédé selon la revendication 4, **caractérisé en ce que** ladite étape de saponification de la chlorophylle est précédée par le fait de :
obtenir une biomasse de plantes vertes ; et
extraire les composants solubles de ladite biomasse de plantes vertes avec un solvant organique pour ainsi obtenir un extrait ; dans lequel ladite étape de saponification permet d'obtenir un extrait saponifié.

12. Procédé selon la revendication 11, **caractérisé en ce que** ledit procédé comprend au moins une étape choisie parmi le groupe constitué par le fait de :
broyer ladite biomasse de plantes vertes à une température qui n'est pas supérieure à 30 °C avant ladite étape d'extraction ; et
ajouter de l'eau après ladite étape de saponification.

13. Procédé selon la revendication 11, **caractérisé en ce que** ledit procédé comprend au moins une étape choisie parmi le groupe constitué par le fait de :
retirer le solvant organique qui subsiste après ladite étape de saponification ; et
retirer la moitié dudit solvant organique contenu dans ledit extrait par l'intermédiaire d'une distillation sous vide à une température qui n'est pas supérieure à 40 °C, pour ainsi obtenir un extrait concentré.

14. Procédé selon la revendication 11, **caractérisé en ce que** ladite biomasse de plantes vertes comprend une biomasse que l'on obtient partir de plantes de la famille des lentilles d'eau.
